(19) Europäisches Patentamt / European Patent Office / Office européen des brevets

(11) **EP 3 667 366 B1**

(12) **FASCICULE DE BREVET EUROPEEN**

(45) Date de publication et mention de la délivrance du brevet:
**27.10.2021 Bulletin 2021/43**

(51) Int Cl.:
**G01S 13/91** *(2006.01)*    **G01S 7/41** *(2006.01)*
**G01S 13/42** *(2006.01)*    **G01S 13/44** *(2006.01)*

(21) Numéro de dépôt: **19209747.5**

(22) Date de dépôt: **18.11.2019**

(54) **PROCEDE ET DISPOSITIF D'AIDE A L'ATTERRISSAGE D'UN AERONEF POUR ALIGNER LEDIT AERONEF SUR UNE PISTE D'ATTERRISSAGE**

VERFAHREN UND VORRICHTUNG ZUR LANDEUNTERSTÜTZUNG FÜR LUFTFAHRZEUG ZUR AUSRICHTUNG DES LUFTFAHRZEUGS AUF DIE LANDEBAHN

METHOD AND DEVICE FOR ASSISTING IN THE LANDING OF AN AIRCRAFT FOR ALIGNING SAID AIRCRAFT ON A RUNWAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2018 FR 1872814**

(43) Date de publication de la demande:
**17.06.2020 Bulletin 2020/25**

(73) Titulaire: **Thales**
**92400 Courbevoie (FR)**

(72) Inventeurs:
• **VEYRAC, Yoan**
  **33701 Merignac (FR)**
• **GARREC, Patrick**
  **33701 Merignac (FR)**
• **CORNIC, Pascal**
  **29238 Brest (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 3 214 461        US-A- 5 640 165**
**US-A1- 2018 259 641     US-B1- 7 619 556**

• BRAILOVSKY ALEXANDER ET AL: "REVS: a radar-based enhanced vision system for degraded visual environments", VISUAL COMMUNICATIONS AND IMAGE PROCESSING; 20-1-2004 - 20-1-2004; SAN JOSE,, vol. 9087, 19 juin 2014 (2014-06-19), pages 908708-908708, XP060037250, DOI: 10.1117/12.2053084 ISBN: 978-1-62841-730-2
• VAN CAEKENBERGHE K ET AL: "A 94 GHz OFDM Frequency Scanning Radar for Autonomous Landing Guidance", RADAR CONFERENCE, 2007 IEEE, IEEE, PI, 17 avril 2007 (2007-04-17), pages 248-253, XP031214565, ISBN: 978-1-4244-0283-0

**Description**

La présente invention concerne un procédé et un dispositif d'aide à l'atterrissage d'un aéronef en phase finale d'atterrissage pour aligner l'aéronef sur la piste, notamment par conditions de visibilité réduite.

Le domaine technique de l'invention est celui de la détection et de la reconnaissance d'un environnement relativement à la position d'un observateur. Le domaine d'exploitation principal est celui du radar, pour des applications d'aide à l'atterrissage. Cette invention vise plus précisément les systèmes d'aide à l'atterrissage « EVS » (Enhanced Vision System).

L'invention adresse le problème de l'aide à l'atterrissage d'aéronefs sur une piste d'atterrissage, par conditions de visibilité réduite, en particulier à cause de conditions météorologiques difficiles, par exemple en cas de brouillard. Les normes imposent des règles d'obtention de visibilité pendant la phase d'atterrissage. Ces règles se traduisent par des seuils de décision qui se réfèrent à l'altitude de l'avion lors de sa phase de descente. A chacun de ces seuils, des repères visuels identifiés doivent être obtenus pour poursuivre la manoeuvre d'atterrissage, sans quoi elle doit être abandonnée. Les manoeuvres d'atterrissage abandonnées représentent un réel problème pour la gestion du trafic aérien et pour la planification des vols. Il faut estimer avant le décollage la capacité à pouvoir atterrir à destination sur la base de prévisions météorologiques, plus ou moins fiables, et le cas échéant prévoir des solutions de repli.

Le problème de l'atterrissage des aéronefs par conditions de visibilité réduite a fait l'objet du développement de plusieurs techniques qui sont actuellement utilisées.

L'une de ces techniques est le système d'atterrissage aux instruments (Instrument Landing System, ILS). Le système ILS repose sur un équipement radiofréquence installé au sol, au niveau de la piste d'atterrissage, et un instrument compatible placé à bord de l'aéronef. L'utilisation d'un tel système de guidage requiert des équipements onéreux et une qualification spécifique des pilotes. Il ne peut par ailleurs pas être installé sur tous les aéroports. Ce système n'est pas généralisé et il est en phase de retrait d'exploitation.

Une autre alternative est l'aide à l'atterrissage par GPS. Bien qu'ayant une précision suffisante, la fiabilité de cette solution est trop faible puisqu'elle peut facilement - intentionnellement ou non - être sujette au brouillage. Son intégrité n'est pas garantie.

Enfin, une technique de vision augmentée est également employée (Enhanced Vision System, EVS). Le principe est d'utiliser des senseurs plus performants que l'œil du pilote par conditions météorologiques dégradées, et d'incruster les informations collectées dans le champ de vision du pilote, au moyen d'un affichage tête haute ou sur la visière d'un casque porté par le pilote. Cette technique repose essentiellement sur l'emploi de capteurs pour détecter le rayonnement des lampes disposées le long de la piste et sur la rampe d'approche. Les lampes à incandescence produisent de la lumière visible mais elles émettent aussi dans le domaine infrarouge. Des capteurs dans le domaine infrarouge permettent de détecter ces rayonnements et la portée de détection est meilleure que celle de l'être humain dans le domaine visible, lors de conditions météorologiques dégradées. Une amélioration de la visibilité permet donc dans une certaine mesure d'améliorer les phases d'approche et de limiter les approches abandonnées. Toutefois, cette technique repose sur le rayonnement infrarouge parasite des lampes présentes au voisinage de la piste. Pour des soucis de durabilité des lampes, la tendance actuelle est au remplacement des lampes à incandescence par les lampes à LED. Ces dernières ont un spectre moins étendu dans le domaine infrarouge. Un effet collatéral est donc de provoquer une obsolescence technique des systèmes EVS à base de capteurs infrarouges.

Une alternative aux senseurs infrarouges est l'obtention d'images par un senseur radar, en bande centimétrique ou millimétrique. Certaines bandes de fréquence choisies en dehors des pics d'absorption de la vapeur d'eau présentent une sensibilité très faible aux conditions météorologiques difficiles. De tels senseurs permettent donc de produire une image au travers de brouillard par exemple. Cependant, même si ces capteurs ont une résolution en distance fine, ils présentent une résolution angulaire bien plus grossière que les solutions optiques. La résolution est directement liée à la taille des antennes utilisées, et elle est souvent trop grossière pour obtenir un positionnement précis de la piste d'atterrissage à une distance suffisante pour effectuer les manoeuvres de recalage.

Il existe donc un besoin de nouvelles solutions techniques permettant de guider la manoeuvre d'approche en vue d'un atterrissage par conditions de visibilité réduite.

L'utilisation de capteurs radar permet de s'affranchir des conditions météorologiques. Il est possible de prévoir des systèmes d'aide à l'atterrissage utilisant de l'imagerie radar permettant de rallier une trajectoire d'atterrissage nominale. En phase finale d'atterrissage, il peut être nécessaire de confirmer finement l'alignement de la trajectoire de l'aéronef avec la piste.

Un document US 7 616 556 B1 divulgue un procédé d'aide à l'atterrissage mis en oeuvre par un radar météo. Un document US 2018/259641 B1 divulgue un procédé pour aligner un aéronef par rapport à une piste mis en oeuvre par un radar météo.

Un but de l'invention est notamment de permettre de guider finement un aéronef en phase finale d'atterrissage. A cet effet l'invention a pour objet un procédé d'aide à l'atterrissage d'un aéronef pour aligner ledit aéronef sur une piste d'atterrissage donnée, l'aéronef étant équipé d'un radar, ledit procédé comportant au moins :

une étape de formation, par ledit radar, d'un nombre N de faisceaux éclairant ladite piste et une partie des abords de ladite piste ;

une étape de découpage de la zone éclairée par lesdits faisceaux en cases distance-angle, lesdits faisceaux délimitant en angle lesdites cases ;

une étape de mesures de puissance rétrodiffusée reçue par cases distance-angle, lesdites mesures étant effectuées pour un ensemble de couples de cases, un couple étant composé de deux cases de même distance dont l'une, dite case droite, croise le bord droit de ladite piste et l'autre, dite case gauche, croise le bord gauche ;

une étape de calcul, pour chaque couple, de la différence de puissance rétrodiffusée entre ladite case droite et ladite case gauche, ledit aéronef étant aligné sur ledit axe lorsque ladite différence est nulle pour au moins deux couples de cases distance-angle.

x étant l'écart entre l'axe de visée dudit radar et l'axe de ladite piste, ledit écart est par exemple exprimé en fonction de ladite différence de puissance rétrodiffusée $\Delta P$ reçue entre les cases gauche et droite d'un couple selon la relation suivante :

$$|\Delta P| = 2.|P(H)\text{-}P(P)|.x$$

P(H) et P(P) étant respectivement la puissance rétrodiffusée par unité de longueur pour les abords de ladite piste et pour ladite piste, ledit écart x étant transmis par ledit radar aux moyens de pilotage dudit aéronef.

Dans un mode de mise en oeuvre particulier, l'écart d'alignement en angle et en position entre ledit aéronef et ladite piste est estimé par une interpolation linéaire des différences de puissance rétrodiffusée pour au moins deux couples de cases distance-angle.

Le gradient de puissance rétrodiffusée le long des cases distances d'au moins un faisceau croisant ladite piste est par exemple utilisé pour déterminer les positions des points d'intersection entre les bords dudit faisceau et ladite piste afin d'affiner l'estimation de l'écart d'alignement de l'aéronef par rapport à ladite piste.

L'écart d'alignement entre l'aéronef et la piste est par exemple affiné au cours du temps grâce à un filtrage des mesures successives de puissance rétrodiffusée effectuées lors de la manoeuvre d'atterrissage dudit aéronef.

La trajectoire dudit aéronef est par exemple asservie pour que ladite différence de puissance rétrodiffusée reçue, pour au moins deux couples de cases distance-angle, tende vers la valeur nulle.

Une information complémentaire de l'alignement dudit aéronef est par exemple obtenue à partir des lampes de la rampe d'approche et des lampes de centre de ladite piste.

L'invention a également pour objet un dispositif pour la mise en oeuvre d'un tel procédé.

D'autres caractéristiques et avantages de l'invention apparaîtront à l'aide de la description qui suit, faite en regard de dessins annexés qui représentent :

[Fig.1] un aéronef en phase finale d'atterrissage

[Fig.2a] une illustration du procédé selon l'invention

[Fig.2b] une illustration du procédé selon l'invention

[Fig.3] une présentation des étapes possibles pour la mise en oeuvre du procédé selon l'invention.

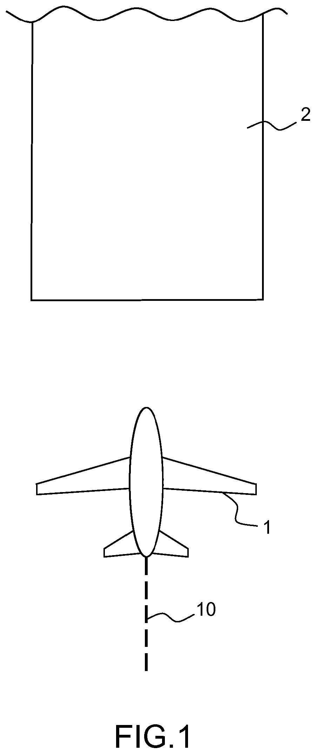

La figure 1 illustre une situation d'un aéronef 1 en phase finale d'atterrissage sur une piste 2 ayant rallié une trajectoire nominale d'atterrissage. La méthode pour rallier cette trajectoire n'est pas l'objet de la présente invention. Elle peut être ralliée ou non par un système d'aide à l'atterrissage. L'aéronef étant équipé d'un capteur radar, l'objet de l'invention concerne la phase finale de l'atterrissage lorsque son porteur est aligné avec la piste selon une pente de descente nominale. L'objet de l'invention porte plus particulièrement sur le traitement radar permettant de confirmer de manière fine l'alignement du porteur 1 avec la piste 2.

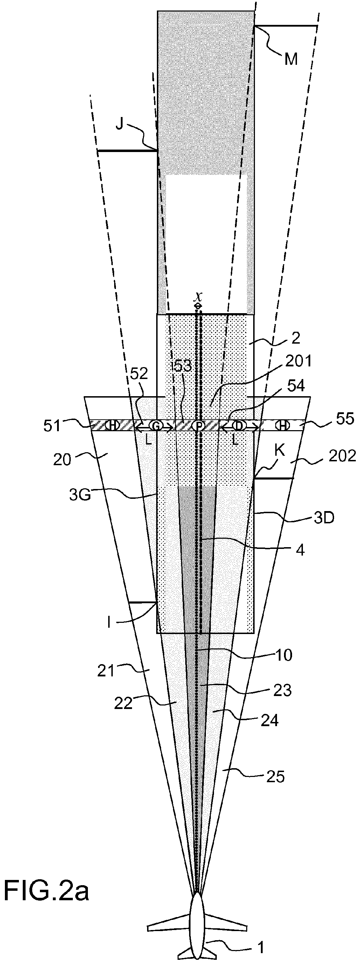

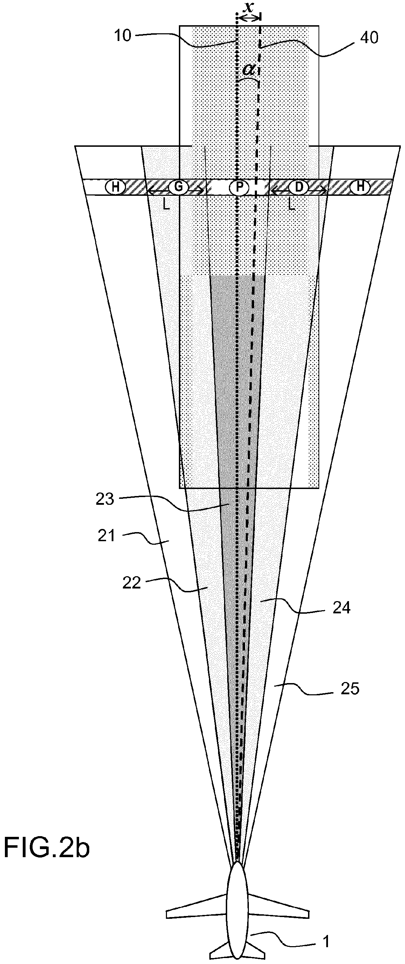

Les figures 2a et 2b illustrent le procédé d'alignement selon l'invention. La figure 2a illustre le cas où l'axe de visée 10 du radar est parallèle à l'axe 4 de la piste. La figure 2b illustre le cas plus général où l'axe de visée 10 fait un angle $\alpha$ avec l'axe 4 de la piste, cet angle $\alpha$ étant cependant faible. C'est bien le cas en pratique, car l'aéronef est en phase finale d'atterrissage, ayant déjà engagé un processus d'alignement avec la piste. Par la suite, pour illustrer le principe selon l'invention on se référera au cas particulier de la figure 2a (les calculs appliqués au cas 2a étant généralisables au cas 2b en raison de la faible valeur de a), en mentionnant en cas de besoin le cas général de la figure 2b.

Lors de la phase finale de l'atterrissage, lorsque le porteur 1 est aligné avec la piste 2 et avec une pente de descente nominale, le senseur radar permet de confirmer de manière fine l'alignement avec la piste grâce au procédé selon l'invention, basé sur une pesée relative.

Plusieurs faisceaux radar 21, 22, 23, 24, 25 sont formés, ayant chacun une largeur angulaire donnée. Dans un mode de réalisation possible, les faisceaux ont sensiblement la même largeur, les faisceaux extérieurs étant cependant un peu plus larges dans le cas d'utilisation d'une antenne à balayage électronique.

A un distance radiale donnée, certains faisceaux 23 interceptent une portion 201 de la piste, d'autres 22, 24 interceptent la bordure 3D, 3G de la piste, et enfin d'autres 21, 25 interceptent uniquement les abords 202 de la piste (typiquement une zone enherbée). Les faisceaux 23 qui interceptent uniquement une portion de piste donnent un niveau de rétrodiffusion de référence de la piste, qui est très faible. Les faisceaux 21, 25 qui interceptent uniquement les abords de la piste donnent un niveau de rétrodiffusion de référence plus élevé. Les faisceaux 22, 24 qui interceptent la bordure donnent un niveau de rétrodiffusion correspondant à une somme pondérée entre la piste et ses abords. Si le porteur est bien aligné avec l'axe central 4 de la piste, il doit y avoir une symétrie entre ces faisceaux. Dans le cas contraire, un déséquilibre différentiel apparait entre les faisceaux qui interceptent les bordures de la piste, c'est la notion de pesée relative évoquée précédemment. Une mesure différentielle permet alors de mesurer le positionnement du porteur par rapport à l'axe de la piste. Cette mesure n'est possible que si la piste à un coefficient de rétrodiffusion uniforme et si les abords a également un coefficient de rétrodiffusion uniforme sur toute sa surface. Cette hypothèse est raisonnable pour le cas courant d'abord enherbés.

Une corrélation avec la position recalée de la centrale inertielle et les données ainsi obtenues est effectuée pour une prise de décision.

Les figures 2a et 2b illustrent ce principe dans un exemple à cinq faisceaux.

Ces faisceaux radar 21, 22, 23, 24, 25 sont représentés, et leur intersection avec le plan de résolution en distance et angle produit des cases distance-angle. Cinq de ces cases 51, 52, 53, 54, 55 sont représentées pour une distance donnée. Elles sont délimitées angulairement par les cinq faisceaux radar. Le faisceau central produit une case-distance 53, notée P, incluse dans la piste. Les faisceaux 21, 25 les plus latéraux produisent des cases 51, 55, notées H, qui interceptent les abords 202 de la piste (par exemple un terrain enherbé). Les cases 52, 54 interceptant la bordure gauche 3G (case notée G) et la bordure droite 3D (case notée D) de la piste reçoivent chacune une puissance rétrodiffusée pour partie de la piste 2 et pour partie des abords 202.

Si l'axe de visée 10 du radar aéroporté est aligné avec l'axe 4 de la piste, la puissance reçue dans les cases gauche (G) et droite (D) est similaire. Sinon, il y a une différence de puissance entre les cases (G) et (D), proportionnellement à l'écart entre l'axe de visée radar et l'axe de la piste.

On considère que la taille de toutes les cases est similaire, ce qui est une approximation valable pour des angles de dépointage faibles. On considère également que les textures de piste et des abords sont homogènes (comme indiqué ci-dessus) et sont caractérisées par leur coefficient de rétrodiffusion. Si x est l'écart entre l'axe de visée 10 du radar et l'axe 4 de la piste, la différence de puissance $\Delta P$ (en valeur absolue) reçue entre les cases (G) et (D) s'exprime :

$$|\varDelta P| = 2.|P(H)\text{-}P(P)|.x \qquad (1)$$

P(H) et P(P) sont respectivement la puissance rétrodiffusée par unité de longueur pour les abords 202 de la piste (zone enherbée par exemple) et pour la piste 2. P(H) et P(P) sont connues par ailleurs et peuvent être définies aisément par des méthodes de calibration. En particulier, les cases 53 uniquement présentes dans la piste donnent un premier niveau de référence (niveau de rétrodiffusion le plus faible) et les cases 51, 52 uniquement dans les abords de la piste donnent un autre niveau de référence (niveau de rétrodiffusion le plus élevé).

Etant donné que l'on sait mesurer la puissance rétrodiffusée pour chaque case distance, à gauche (G) et à droite (D), on peut obtenir $|\Delta P|$. A partir de cette mesure de $|\Delta P|$, on obtient x par application de la relation (1) ci-dessus.

La connaissance x de permet de corriger le pilotage afin de rallier l'axe de la piste.

La détermination de x est d'autant plus précise que le contraste est grand entre les textures (c'est-à-dire entre P(H) et P(P)), et que celles-ci sont homogènes.

Le fait que l'aéronef soit bien aligné mais un peu décalé de l'axe de la piste comme illustré sur la figure 2a est un cas particulier. Il peut en effet ne pas être tout à fait aligné comme indiqué précédemment. Auquel cas, une erreur d'angle se rajoute au décalage x, et cela pourrait compliquer un peu les calculs et les explications associées. Cependant dans les faits, les angles en question sont faibles et cela n'impacte pas les calculs pour une distance donnée d, dans le cadre de l'invention. Pour tenir compte de cette distance d et de l'erreur d'angle a, on considère x = f(d), et l'on applique la relation (1) pour toutes les cases distance, x variant d'une distance à l'autre. En pratique, on peut sélectionner au moins deux distances comme décrit par la suite.

On peut étendre ce principe de base à plusieurs polarisations à l'émission et à la réception pour améliorer la précision de mesure.

Pour confirmer le bon alignement du porteur avec la piste, l'équilibre entre les cases (G) et (D) doit être vérifié sur toutes les cases distance qui vérifient les conditions d'homogénéité de rétrodiffusion. Cet équilibre est vérifié lorsque $|\Delta P|$ est sensiblement nul. Le procédé est ainsi amené à détecter la symétrie de puissance rétrodiffusée entre la droite et la gauche de la piste et de ses abords, dans les limites clairement définies qui permettent de mesurer cette symétrie.

La connaissance de la largeur de la piste permet de connaître le positionnement des cases distance-angle par rapport aux bords de la piste, ce qui consolide les calculs fournis pour les pesées (détection des symétries de puissance gauche-droite).

Pour confirmer l'alignement (erreur d'angle $\alpha = 0$ et d'écart latéral x = 0), il n'est pas nécessaire de détecter la symétrie sur toutes les cases qui croisent les bords de pistes. Il suffit de prendre en compte une partie de ces cases sur une distance donnée. Une solution a minima peut même consister à faire la pesée sur des cases à une distance d1 et sur des cases à une autre distance d2, l'alignement étant vérifié si la symétrie est détectée pour ces deux distances. On vérifie x1 = 0 à la distance d1 et x2 = 0 à la distance d2. L'erreur x évaluée à plusieurs distances permet d'estimer l'erreur d'angle, les différentes évaluations pouvant par ailleurs être corrélées avec des hypothèses de largeur de piste.

L'évaluation de l'écart d'alignement en angle et en position entre le porteur et la piste peut être effectuée par une interpolation linéaire des écarts x obtenus pour au moins deux couples de cases distance-angle. Cette interpolation sera avantageusement réalisée grâce à tous les couples de cases distance-angle disponibles afin d'améliorer la précision du procédé.

Les figures 2a et 2b donnent un exemple de pesée avec cinq faisceaux, en pratique on peut utiliser un nombre N de faisceaux, N étant supérieur à 5 et pas nécessairement impair. Plus le nombre de faisceaux est important, plus on obtient de cases distance-angle croisant les bords 3 de la piste, permettant de faire une pesée plus fine.

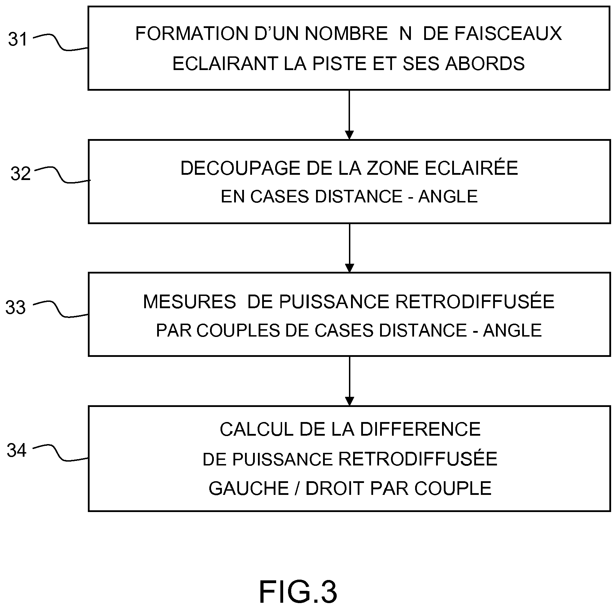

La figure 3 résume les principales étapes du procédé selon l'invention tel que décrit précédemment.

Dans une première étape 31 le radar équipant l'aéronef forme un nombre N de faisceaux éclairant ladite piste et une partie des abords de ladite piste. Les faisceaux émis ont même largeur angulaire.

Dans une deuxième étape 32, la zone éclairée par lesdits faisceaux est découpée en cases distance-angle, lesdits faisceaux délimitant en angle lesdites cases. Ce découpage est réalisé par les moyens de traitement du radar.

Dans une étape suivante 33, le radar effectue des mesures de puissance rétrodiffusée par cases distance-angle, lesdites mesures étant effectuées pour un ensemble de couples de cases 52, 54. Chaque couple est composé de deux cases de même distance dont l'une 54 croise le bord droit 3D de la piste et l'autre 52 croise le bord gauche 3G.

Une étape suivante 34 réalise le calcul, pour chaque couple, de la différence de puissance rétrodiffusée entre la case droite 54 et la case gauche 52. L'aéronef est aligné sur l'axe 4 lorsque la différence est nulle pour chaque couple de cases. A minima, on peut considérer que l'aéronef est aligné si la différence de puissance rétrodiffusée entre la gauche et la droite est nulle pour au moins deux couples de cases distance-angle.

Le calcul de différence de puissance donne l'écart x d'alignement comme décrit précédemment. La trajectoire de l'aéronef est asservie de façon à minimiser cet écart, en d'autres termes pour que la différence de puissance rétrodiffusée reçue par couple de cases 52, 54 tende vers la valeur nulle. A cet effet, cet écart est transmis par le radar aux moyens de pilotage de l'aéronef, ces moyens automatiques ou manuel (par le pilote).

Une confirmation complémentaire de l'alignement peut être obtenue à partir des lampes de la rampe d'approche et des lampes éventuelles de centre de piste.

Le seuil de piste est quant à lui précisément positionné en distance, par mesure de contraste entre la piste et les abords, ou entre la piste et les lampes de seuil de piste.

Certains seuils sont décalés par rapport à la bordure de piste. Le positionnement des différentes structures reconnaissables (bordure de piste et lampes de seuil de piste) par rapport au point de toucher des roues peut être obtenu par apprentissage de la piste ou injecté par la connaissance géométrique précise de la piste.

De même, la largeur des faisceaux étant connue ainsi que celle de la piste (donnée dans des tables), il est aussi possible, pour chaque faisceau 22, 24 croisant la piste, de repérer les cases distance correspondant aux intersections I, J et K, M entre les bords du faisceau et la piste par un calcul de gradient de la puissance rétrodiffusée de long de l'axe distance.

Sur la figure 2a on dispose donc des couples de points supplémentaires I , J et K, M qui vont permettre de tracer les bords de piste. Entre ces points, la puissance rétrodiffusée va varier linéairement entre les deux valeurs extrêmes « piste » et « hors-piste ». Il conviendra de considérer les valeurs linéiques de puissance rétrodiffusée afin de compenser le phénomène d'élargissement des cases distance en fonction de l'éloignement au radar.

Cette méthode permet d'affiner l'écart estimé entre l'axe de visée du radar 10 et l'axe de la piste 4.

Il est à noter que les prises d'images étant effectuées à une cadence relativement importante, il peut être opportun d'intégrer les informations dans le temps afin d'affiner les estimations d'alignement et de positionnement précis au cours du temps. A cet effet, on peut compenser le déplacement du porteur par la prise en compte de son vecteur vitesse, notamment pour la prise en compte de la distance des différentes cases. En affectant des poids sur les valeurs d'écart latéral et angulaire trouvées au cours du temps entre l'aéronef et la piste, et en appliquant un filtrage (par exemple de type « alpha beta »), on peut notamment améliorer le processus décrit précédemment et palier les cas de bords de pistes irréguliers ou inhomogènes d'un point de vue rétrodiffusion.

## Revendications

1. Procédé d'aide à l'atterrissage d'un aéronef pour aligner ledit aéronef sur une piste d'atterrissage donnée (2), ledit aéronef étant équipé d'un radar, ledit procédé comportant au moins :

   - une étape (31) de formation, par ledit radar, d'un nombre N de faisceaux (21, 22, 23, 24, 25) éclairant ladite piste (2) et une partie des abords (202) de ladite piste ;
   - une étape (32) de découpage de la zone éclairée par lesdits faisceaux en cases distance-angle (51, 52, 53, 54, 55), lesdits faisceaux délimitant en angle lesdites cases ;
   - une étape (33) de mesures de puissance rétrodiffusée reçue par cases distance-angle,

   **caractérisé en ce que** lesdites mesures étant effectuées pour un ensemble de couples de cases (52, 54), un couple étant composé de deux cases de même distance dont l'une (54), dite case droite, croise le bord droit (3D) de ladite piste et l'autre (52), dite case gauche, croise le bord gauche (3G), ledit procédé comporte :

   - une étape (34) de calcul, pour chaque couple, de la différence de puissance rétrodiffusée entre ladite case droite et ladite case gauche, ledit aéronef étant aligné sur ledit axe (4) lorsque ladite différence est nulle pour au moins deux couples de cases distance-angle.

2. Procédé selon la revendication 1, **caractérisé en ce que** x étant l'écart entre l'axe de visée (10) dudit radar et l'axe (4) de ladite piste (2), ledit écart est exprimé en fonction de ladite différence de puissance rétrodiffusée $\Delta P$ reçue entre les cases gauche et droite d'un couple selon la relation suivante :

$$|\Delta P| = 2.|P(H)\text{-}P(P)|.x$$

   $P(H)$ et $P(P)$ étant respectivement la puissance rétrodiffusée par unité de longueur pour les abords (202) de ladite piste et pour ladite piste (2), ledit écart x étant transmis par ledit radar aux moyens de pilotage dudit aéronef.

3. Procédé selon l'une quelconque des revendications précédentes, **caractérisé en ce que** l'écart d'alignement en angle et en position entre ledit aéronef (1) et ladite piste (2) est estimé par une interpolation linéaire des différences de puissance rétrodiffusée pour au moins deux couples de cases distance-angle.

4. Procédé selon l'une quelconque des revendications précédentes, **caractérisé en ce que** le gradient de puissance rétrodiffusée le long des cases distances d'au moins un faisceau (22, 24) croisant ladite piste (2) est utilisé pour déterminer les positions des points d'intersection (I, J, K, M) entre les bords dudit faisceau et ladite piste afin d'affiner l'estimation de l'écart d'alignement de l'aéronef par rapport à ladite piste.

5. Procédé selon l'une quelconque des revendications précédentes, **caractérisé en ce que** l'écart d'alignement entre l'aéronef et la piste est affiné au cours du temps grâce à un filtrage des mesures successives de puissance rétrodiffusée effectuées lors de la manoeuvre d'atterrissage dudit aéronef.

6. Procédé selon l'une quelconque des revendications précédentes, **caractérisé en ce que** la trajectoire dudit aéronef est asservie pour que ladite différence de puissance rétrodiffusée reçue, pour au moins deux couples de cases distance-angle, tende vers la valeur nulle.

7. Procédé selon l'une quelconque des revendications précédentes, **caractérisé en ce qu'**une information complémentaire de l'alignement dudit aéronef est obtenue à partir des lampes de la rampe d'approche et des lampes de centre de ladite piste.

8. Dispositif radar, caractérisé en qu'il est apte à mettre en oeuvre le procédé selon l'une quelconque des revendications précédentes.

**Patentansprüche**

1. Verfahren zum Unterstützen der Landung eines Flugzeugs, um das Flugzeug auf einer gegebenen Landebahn (2) auszurichten, wobei das Flugzeug mit einem Radar ausgestattet ist, wobei das Verfahren mindestens Folgendes beinhaltet:

   - einen Schritt (31) des Bildens, durch das Radar, einer Anzahl N von Strahlen (21, 22, 23, 24, 25), die die Landebahn (2) und einen Teil der Umgebung (202) der Landebahn beleuchten;
   - einen Schritt (32) des Unterteilens der von den Strahlen beleuchteten Fläche in Distanz-Winkel-Felder (51, 52, 53, 54, 55), wobei die Strahlen die Felder in Winkel begrenzen;
   - einen Schritt (33) des Messens der empfangenen rückgestreuten Leistung nach Distanz-Winkel-Feldern;

   **dadurch gekennzeichnet, dass**, da die Messungen für einen Satz von Felderpaaren (52, 54) durchgeführt werden, wobei ein Paar aus zwei Feldern der gleichen Distanz zusammengesetzt ist, von denen das eine (54), rechtes Feld genannt, den rechten Rand (3D) der Landebahn kreuzt, und das andere (52), linkes Feld genannt, den linken Rand (3G) kreuzt, das Verfahren Folgendes beinhaltet:

   - einen Schritt (34) des Berechnens, für jedes Paar, der Differenz der rückgestreuten Leistung zwischen dem rechten Feld und dem linken Feld, wobei das Flugzeug auf die Achse (4) ausgerichtet wird, wenn die Differenz für mindestens zwei Paare von Distanz-Winkel-Feldern Null ist.

2. Verfahren nach Anspruch 1, **dadurch gekennzeichnet, dass**, da x die Abweichung zwischen der Sichtachse (10) des Radars und der Achse (4) der Landebahn (2) ist, die Abweichung in Abhängigkeit von der rückgestreuten Leistungsdifferenz $\Delta P$ ausgedrückt wird, die zwischen dem linken und dem rechten Feld eines Paares gemäß der folgenden Beziehung empfangen wird:

$$|\Delta P| = 2.|P(H)\text{-}P(P)|.x$$

   wobei $P(H)$ und $P(P)$ die rückgestreute Leistung pro Längeneinheit für die Umgebung (202) der Landebahn beziehungsweise für die Landebahn (2) sind, wobei die Abweichung x vom Radar an die Steuermittel des Flugzeugs übertragen wird.

3. Verfahren nach einem der vorherigen Ansprüche, **dadurch gekennzeichnet, dass** der Ausrichtungsabstand in Winkel und Position zwischen dem Flugzeug (1) und der Landebahn (2) durch eine lineare Interpolation der rückgestreuten Leistungsdifferenzen für mindestens zwei Paare von Distanz-Winkel-Feldern geschätzt wird.

4. Verfahren nach einem der vorherigen Ansprüche, **dadurch gekennzeichnet, dass** der Gradient der rückgestreuten Leistung entlang der Distanzfelder mindestens eines die Landebahn (2) kreuzenden Strahls (22, 24) zum Bestimmen der Positionen der Schnittpunkte (I, J, K, M) zwischen den Rändern des Strahls und der Landebahn verwendet wird, um die Schätzung der Ausrichtungsabweichung des Flugzeugs in Bezug auf die Landebahn zu verfeinern.

5. Verfahren nach einem der vorherigen Ansprüche, **dadurch gekennzeichnet, dass** die Ausrichtungsabweichung zwischen dem Flugzeug und der Landebahn im Laufe der Zeit durch Filtern aufeinander folgender Messungen der rückgestreuten Leistung verfeinert wird, die während des Landemanövers des Flugzeugs durchgeführt wurden.

6. Verfahren nach einem der vorherigen Ansprüche, **dadurch gekennzeichnet, dass** die Flugbahn des Luftfahrzeugs so gesteuert wird, dass die Differenz der empfangenen rückgestreuten Leistung für mindestens zwei Paare von Distanz-Winkel-Feldern gegen den Nullwert tendiert.

7. Verfahren nach einem der vorherigen Ansprüche, **dadurch gekennzeichnet, dass** eine zusätzliche Information über die Ausrichtung des Flugzeugs auf der Basis der Lampen der Anflugbefeuerung und der Landebahnmittenlampen erhalten wird.

8. Radargerät, **dadurch gekennzeichnet, dass** es das Verfahren nach einem der vorherigen Ansprüche durchführen kann.

**Claims**

1. An aircraft-landing-assistance method for aligning the aircraft with a given runway (2), said aircraft being equipped with a radar, said method having at least:

   - a step (31) of said radar forming a number N of beams (21, 22, 23, 24, 25) that illuminate said runway (2) and a portion of the surroundings (202) of said runway;
   - a step (32) of dividing the zone illuminated by said beams into distance-angle boxes (51, 52, 53, 54, 55), said beams delineating said boxes anglewise;
   - a step (33) of measuring backscattered power received by distance-angle boxes,

   **characterised in that**, said measurements being carried out for a set of pairs of boxes (52, 54), a pair being composed of two boxes of same distance, one (54) of which, called the right box, crosses the right edge (3D) of said runway, and the other one (52) of which, called the left box, crosses the left edge (3G), said method has:

   - a step (34) of computing, for each pair, the difference in backscattered power between said right box and said left box, said aircraft being aligned with said axis (4) when said difference is zero for at least two pairs of distance-angle boxes.

2. The method according to claim 1, **characterised in that**, x being the deviation between the axis of sight (10) of said radar and the axis (4) of said runway (2), said deviation is expressed as a function of said difference in received backscattered power $\Delta P$ between the left and right boxes of a pair according to the following relationship:

$$\left| \Delta P \right| \; = \; 2.\left| P(H)\text{-}P(P) \right|.x$$

   $P(H)$ and $P(P)$ being the backscattered power per unit length for the surroundings (202) of said runway and for said runway (2), respectively, said deviation x being transmitted by said radar to the means for piloting said aircraft.

3. The method according to any one of the preceding claims, **characterised in that** the anglewise and positionwise deviation in the alignment between said aircraft (1) and said runway (2) is estimated via a linear interpolation of the differences in backscattered power for at least two pairs of distance-angle boxes.

4. The method according to any one of the preceding claims, **characterised in that** the gradient in backscattered power along the distance boxes of at least one beam (22, 24) crossing said runway (2) is used to determine the positions of the points of intersection (I, J, K, M) between the edges of said beam and said runway in order to refine the estimate of the deviation in the alignment of the aircraft with respect to said runway.

5. The method according to any one of the preceding claims, **characterised in that** the deviation in the alignment between the aircraft and the runway is refined over time by filtering successive backscattered-power measurements carried out during the manoeuvre of landing said aircraft.

6. The method according to any one of the preceding claims, **characterised in that** the path of said aircraft is controlled so that said difference in received backscattered power, for at least two pairs of distance-angle boxes, tends towards the value zero.

7. The method according to any one of the preceding claims, **characterised in that** a complementary piece of information on the alignment of said aircraft is obtained from the lights of the approach lighting system and from the centreline lights of said runway.

8. A radar device, **characterised in that** it is able to implement the method according to any one of the preceding claims.

2

1

10

FIG.1

FIG.2a

FIG.2b

31 — FORMATION D'UN NOMBRE  N  DE FAISCEAUX
ECLAIRANT LA PISTE ET SES ABORDS

32 — DECOUPAGE DE LA ZONE ECLAIRÉE
EN CASES DISTANCE - ANGLE

33 — MESURES  DE PUISSANCE RETRODIFFUSÉE
PAR COUPLES DE CASES DISTANCE - ANGLE

34 — CALCUL DE LA DIFFERENCE
DE PUISSANCE RETRODIFFUSÉE
GAUCHE / DROIT PAR COUPLE

# FIG.3

**EP 3 667 366 B1**

## RÉFÉRENCES CITÉES DANS LA DESCRIPTION

**Documents brevets cités dans la description**

- US 7616556 B1

- US 2018259641 B1